# EUROPÄISCHE PATENTANMELDUNG

(11) **EP 1 506 795 A2**
(43) Veröffentlichungstag der Anmeldung: **16.02.2005**
(21) Anmeldenummer: 04018889.8
(22) Anmeldetag: 10.08.2004
(51) Int. Cl.: A62B 33/00

(54) **Verfahren und Vorrichtung für die Sicherung von und Kommunikation auf Baustellen unter Tage**

(30) Priorität: 11.08.2003 CH 13802003
(71) Anmelder: Mirafin AG, 6340 Baar (CH)
(72) Erfinder: Nägeli, Hans Peter, 8910 Affoltern a/A (CH); Nydegger, Marcel, 6010 Kriens (CH)
(74) Vertreter: Blum, Rudolf E.

(57) **Zusammenfassung**

Das Verfahren und die Vorrichtung zur Überwachung von und Kommunikation auf Baustellen unter Tage weist eine Vielzahl von über ein Basisnetz (3) verbundene Basisstationen (2) und eine Leitstation (4) auf. Mobile Endgeräte (1) sind Personen und/oder Objekten zugeordnet. Die mobilen Endgeräte (1) melden sich jeweils bei einer der Basisstationen (2) an. Der Baustellenbereich ist in Funkzellen unterteilt. Aus der Funkzelle wird die Position von Personen und Objekten bestimmt und mit einem graphischen Informationssystem (21) in der Leitstelle (16) angezeigt.

## Beschreibung

Die Erfindung betrifft ein Verfahren gemäss Oberbegriff des Anspruchs 1 und eine Vorrichtung gemäss Oberbegriff des Anspruchs 21.

Verfahren und Vorrichtungen dieser Art werden verwendet um auf Baustellen unter Tage Sicherheit zu gewährleisten und Kommunikation zu ermöglichen. Die bekannten Lösungen sind meist aus verschiedenen unabhängigen Lösungen zusammengesetzt. So wird für die Kommunikation Drahttelefonie eingesetzt. Klimadaten werden zunächst manuell erfasst und erst später elektronisch weiterverarbeitet. Die Personenüberwachung erfolgt über ID-Karten, "Batches" oder "Tags", welche die Personen bei sich tragen. An speziellen Kontrollpunkten sind entsprechende Lesegeräte vorgesehen. Die Personenüberwachung ist ereignisbasiert, d.h. es werden Meldungen, wie z.B. "Person X" betritt "Bereich A", erfasst. Die Bauwerksüberwachung bzw. Steuerung erfolgt über eine Vielzahl von Kabelsträngen. Weitere Überwachungs- und Kontrollsysteme sind z.B. für Energieversorgung, Verkehrssteuerung oder Bahnbetrieb erforderlich.

Die bekannten zusammengesetzten Lösungen sind in Planung, Anschaffung, Installation, Betrieb und allfälliger Demontage teuer, da eine Vielzahl verschiedener Fachleute und Zulieferer beteiligt sind und eine Vielzahl von Komponenten und insbesondere oftmals redundanter Leitungen erforderlich ist. Der Betrieb ist insbesondere dann teuer, wenn Daten manuell abgelesen und erst dann elektronisch erfasst werden.

Bauprojekte unter Tage, insbesondere beim Tunnelbau, gliedern sich in der Regel in die Phasen Planung, Bau, Ausrüstung und Betrieb. Die bekannten Lösungen sind in vielen Fällen auf eine dieser Phasen beschränkt und müssen für die nächste Phase durch eine andere Lösung ersetzt werden.

Die Reichweite des klassischen Baustellenfunks ist unter Tage, insbesondere in Tunnelröhren, auf wenige hundert Meter begrenzt. Die Bauwerke erstrecken sich jedoch fallweise auf mehr als 70 km.

Die ereignisbasierte Personenüberwachung ist ungenau, da sie über den Verbleib und insbesondere den Zustand der Personen zwischen den einzelnen Ereignissen keine oder nur ungenaue Aussagen gemacht werden können.

Bereits in der Betriebsphase befindliche öffentliche Strassen- oder Eisenbahntunnel sind bisweilen an öffentliche zelluläre Mobilfunknetze angeschlossen. Dafür ist im Scheitelpunkt des Tunnels ein Strahlkabel verlegt. Der Tunnel ist in ein oder zwei Funkzellen unterteilt. Derartige Systeme sind jedoch nicht für die Bauphase vorgesehen, haben einzig die Funktion Kommunikation, sind relativ teuer und bieten wenig Sicherheit, da das Kabel an der Tunneldecke, insbesondere bei einem Brand, leicht beschädigt und unterbrochen werden kann.

Es stellt sich daher die Aufgabe, ein Verfahren der eingangs genannten Art bereitzustellen, das die oben genannten Nachteile zumindest teilweise vermeidet. Diese Aufgabe wird von Anspruch 1 gelöst.

Des Weiteren stellt sich die Aufgabe, eine Vorrichtung der eingangs genannten Art bereitzustellen, die die oben genannten Nachteile zumindest teilweise vermeidet. Diese Aufgabe wird von Anspruch 21 gelöst.

Das erfindungsgemässe Verfahren und die erfindungsgemässe Vorrichtung haben den Vorteil, dass die drahtlose Kommunikation mit bzw. unter Personen und/oder Objekten und die räumliche Überwachung dieser in demselben System integriert sind. Die Lösung ist daher kostengünstiger als bekannte Lösungen.

Weitere Vorteile und bevorzugte Ausführungsbeispiele ergeben sich aus den abhängigen Ansprüchen, sowie aus der nun folgenden Beschreibung anhand der Figuren. Dabei zeigen:
Fig. 1 ein Schema eines Unter-Tage-Bauwerkes mit einem Blockschaltbild einer bevorzugten Ausführung der erfindungsgemässen Überwachungs- und Kommunikationsvorrichtung,
Fig. 2 ein Schema eines Unter-Tage-Bauwerkes mit Darstellung der Funkzellen einer bevorzugten Ausführung der erfindungsgemässen Überwachungs- und Kommunikationsvorrichtung,
Fig. 3 ein Blockdiagramm einer bevorzugten Ausführung der erfindungsgemässen Überwachungs- und Kommunikationsvorrichtung,
Fig. 4 eine Basisstation einer bevorzugten Ausführung der erfindungsgemässen Überwachungs- und Kommunikationsvorrichtung,
Fig. 5 ein Schema der Anbindung der erfindungsgemässen Überwachungs- und Kommunikationsvorrichtung an ein öffentliches Telefonnetz mittels Interkonnektion,
Fig. 6 ein Schema der Anbindung der erfindungsgemässen Überwachungs- und Kommunikationsvorrichtung an ein öffentliches Telefonnetz mittels Roaming.

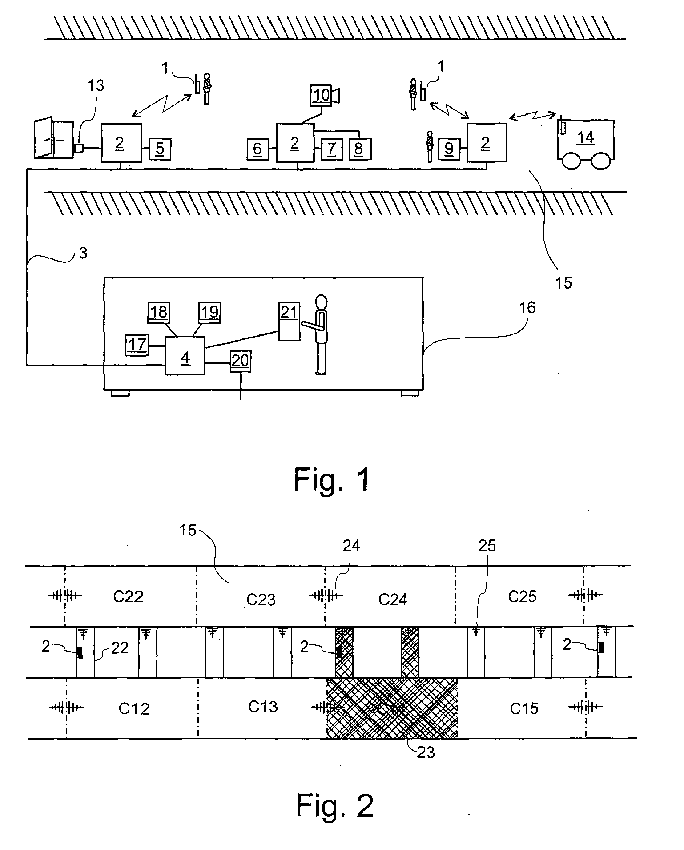

Fig. 1 zeigt ein Schema eines Unter-Tage-Bauwerkes mit einem Blockschaltbild einer bevorzugten Ausführung der erfindungsgemässen Überwachungs- und Kommunikationsvorrichtung. Zugleich wird eine bevorzugte Ausführung des erfindungsgemässen Verfahrens zur Überwachung von und Kommunikation auf Baustellen unter Tage illustriert. Beim hier als Beispiel gezeigten Unter-Tage-Bauwerk handelt es sich um eine Tunnelröhre 15, z.B. für einen Strassen- oder Eisenbahntunnel. Es sind jedoch auch andere Anwendungen, z.B. im Bergbau, möglich. Personen und Objekte sind mit mobilen Endgeräten 1 ausgestattet. Bei den Personen handelt es sich insbesondere um Arbeiter, bei den Objekten insbesondere um Fahrzeuge, Geräte und Transportgut, z.B. Baumaschinen 10. Die mobilen Endgeräte 1 sind bevorzugt GSM-Mobiltelefone bzw. GSM-Datenübertragungsmodule. Das System kann jedoch auch für DECT-Telefone bzw. DECT-Datenübertragungsmodule und/oder GPRS Telefone bzw. GPRS-Datenübertragungsmodule und/oder WLAN-Telefone bzw. WLAN-Datenübertragungsmodule und/oder UMTS-Telefone bzw. UMTS-Datenübertragungsmodule und/oder EDGE-Telefone bzw. EDGE-Datenübertragungsmodule ausgestaltet werden. Die Abkürzung "EDGE" steht für "enhanced data for GSM evolution". Für Personen können insbesondere auch Helme mit Sprechgarnitur vorgesehen sein, welche an ein mobiles Endgerät 1 angeschlossen sind oder ein solches integriert haben. Die mobilen Endgeräte 1 stehen mit den Basisstationen 2 in Funkverbindung. Die Basisstationen 2 sind über ein "Backbone", d.h. ein Basisnetz 3, miteinander und mit einer Leitstation 4 verbunden. Das Basisnetz 3 ist bevorzugt ein leitungsgebundenes Netz, insbesondere ein Glasfasernetz. Es basiert insbesondere auf TCP/IP und/oder SDH, insbesondere STM-1 electrical, d.h. elektrisch, ETSI G.703 oder STM-N optical, d.h. optisch, ETSI G.957, G.958, wobei N, die Hierarchiestufe, gleich 1, 4, 16 oder 64 ist. Das Basisnetz 3 kann jedoch auch Funkverbindungen aufweisen.

Die Basistationen 2 weisen neben den Antennen für die Kommunikation mit den mobilen Endgeräten 1 bzw. den Anschlüssen für solche Antennen Schnittstellen zum Anschluss von Überwachungselementen, Kontrollelementen, Computern, Telefonen und/oder weiteren Stationen auf. Diese entsprechen bevorzugt einem oder mehreren der folgenden Standards:
- Ethernet/IP, insbesondere Ethernet 10/100 Base-T oder 10/100 Base-FX oder 1000 Base-T oder 1000 Base-SX oder 1000 Base-LX gemäss IEEE 802.x LAN Standards, insbesondere gemäss IEEE 802.3 Standards
- SDH, insbesondere STM-1 electrical, d.h. elektrisch, ETSI G.703 oder STM-N optical, d.h. optisch, ETSI G.957, G.958, wobei N, die Hierarchiestufe, gleich 1, 4, 16 oder 64 ist.
- PDH, insbesondere E1, E2, E3 oder E4 gemäss ETSI G.703 und/oder ETSI G.704
- RS-485, d.h. US-Norm EIA RS485
- RS-232, d.h. US-Norm EIA RS232C, DIN 66020 oder CCITT V.24
- ISDN- oder Analogtelefon.

Insbesondere sind an den Basisstationen 2 Messfühler und Überwachungselemente, wie z.B. Gefahrenmelder, Brandmelder 5, Wassermelder 6, Gasmesser 7, Kameras 10, Felsbewegungsdetektoren 11 oder Klimasensoren 12, z.B. Temperatur-, Luftfeuchtigkeits-, Luftgeschwindigkeits- und/oder Luftdrucksensoren, angeschlossen. Des Weiteren sind Kontrollelemente, wie z.B. Lüftungssteuerungen 8 oder Durchfahrts-, Durchgangs-, Verkehrs- oder Türsteuerungen 13 angeschlossen. Zudem ist es möglich tragbare Computer 9, insbesondere temporär, an eine Basisstation 2 anzuschliessen. Die Kameras 10 dienen der Bildüberwachung und sind bevorzugt als "Webcam", d.h. Netzkamera, ausgestaltet und integriert, so dass die Bilder z.B. von der Leitstelle 16 aus über einen Standardbrowser abgerufen werden können. Gemäss Figur 1 sind die in diesem Absatz angegebenen Komponenten direkt über Kabel an den Basisstationen 2 angeschlossen. Es ist jedoch auch vorgesehen Verbindungen drahtlos, z.B. über Funk, herzustellen.

Baumaschinen 14, insbesondere Tunnelbohrmaschinen, können ebenfalls entweder über Kabel, oder aber wie dargestellt über Funk, insbesondere mittels eines mobilen Endgerätes 1 mit einer Basisstation 2 verbunden werden. Die Verbindung dient der Überwachung und Steuerung, aber auch dem Herunterladen von Software.

Messfühler, Überwachungselemente, Baumaschinen und dergleichen können jederzeit an das Basisnetz 2 angeschlossen oder davon getrennt werden. Die in Figur 1 gezeigte Konfiguration ist exemplarisch.

Brand-, Wasser- oder Gasmelder dienen insbesondere dazu bei Bedarf automatisch einen Alarm auszulösen. Daneben sind auch Mittel vorgesehen um bei Gefahren, besonderen Ereignissen oder zu Testzwecken manuell einen Alarm oder Notruf auszulösen. Dazu sind z.B. Alarm- bzw. Notruftaster vorgesehen, welche über Draht oder Funk mit einer der Basisstationen 2 verbunden sind. Zudem kann mittels der mobilen Endgeräte 1 ein Alarm oder Notruf ausgelöst werden. Insbesondere ist auch eine Totmann-Funktion vorgesehen, d.h. der Alarm oder Notruf wird nicht durch eine Benutzeraktion sondern durch das Ausbleiben einer Benutzeraktion ausgelöst. Ein Alarm wird optisch und/oder akustisch angezeigt, insbesondere in der Leitstelle 16, an den Basisstationen 2, an daran angeschlossenen Elementen und/oder mittels der mobilen Endgeräte 1. Die mobilen Endgeräte 1 können den Alarm akustisch und/oder über Vibration anzeigen. Zudem kann der Grund des Alarms als Text dargestellt werden. Der Alarm kann insbesondere über dafür autorisierte mobile Endgeräte 1 bzw. von dafür autorisierten Benutzern quittiert werden.

Bevorzugt ausserhalb des Bauwerkes, d.h. über Tage, ist in einem Container eine Leitstelle 16 eingerichtet. In dieser ist die an das Basisnetz 3 angeschlossene Leitstation 4 angeordnet. An der Leitstation 4 angeschlossen oder in diese integriert sind weiter Komponenten, wie z.B. ein Location-Server 17, d.h. eine Positionsdatenbank für mobile Endgeräte 1 und damit für Personen und Objekte, ein SMS-Server 18, d.h. eine Vermittlungsstelle und Speicher für kurze Textnachrichten, ein E-Mail-Server, d.h. eine Vermittlungsstelle und Speicher für elektronische Post, ein MSC, d.h. ein Mobile-Switching-Center 20 bzw. eine Vermittlungszentrale für Mobiltelefonverbindungen, stationäre Telefone und ein GIS, d.h. ein graphisches Informationssystem 21. Das System ist so konfiguriert, dass die mobilen Endgeräte 1 mindestens alle 30 min, bevorzugt mindestens alle 5 min zu einer Antwort bzw. einem Location Update, d.h. einer Ortsaktualisierung, aufgefordert werden um festzustellen oder zu verifizieren, in welcher Funkzelle sie sich befinden und insbesondere ob sie noch aktiv bzw. eingeschaltet sind. Ein derartiges "Polling", d.h. Sendeaufruf, ist bei bekannten öffentlichen zellulären Mobiltelefonsystemen über Tage ebenfalls vorgesehen, nur sind die Abstände zwischen den Sendeaufrufen in der Regel wesentlich grösser. Sie liegen im Bereich von mehreren Stunden. Der Zweck dieses "Pollings" ist zudem ein anderer, nämlich eine Datenaktualisierung um allfällige Anrufe in die richtige Zelle leiten zu können.

Das graphische Informationssystem 21 weist insbesondere einen Bildschirm auf, auf dem ein schematischer Plan des Bauwerkes darstellbar ist, z.B. in einer Darstellung wie der von Fig. 2. Auf diesem sind Symbole der Überwachten Personen und Objekte dargestellt. Um eine Sprechverbindung zu einer Person herzustellen und/oder um Informationen zu einer Person zu erhalten wird das entsprechende Symbol angeklickt. Neben der Ortung von Personen und Objekten lassen sich auch die Resultate sämtlicher Überwachungsfunktionen darstellen und Steuervorgänge ausführen. Zudem kann das Basisnetz 3 als solches überwacht und verwaltet werden.

Es können auch mehrere, insbesondere redundante Leitstationen 4 und insbesondere Leitstellen 16 vorgesehen sein. Dies verbessert die Zuverlässigkeit, da bei einem Ausfall einer Leitstation 4 oder Leitstelle 16 der Betrieb mit einer anderen weitergeführt werden kann. Des Weiteren kann damit der Vortrieb oder Ausbau von mehr als zwei Seiten gleichzeitig unterstützt werden. Dabei sind zunächst separate Teilnetze mit eigener Leitstation 4 bzw. Leitstelle 16 vorgesehen. Nach dem Durchbruch bzw. dem Zusammenschluss der Netze können die Leitstationen 4 bzw. Leitstellen 16 am Netze bleiben und werden parallel bzw. redundant weiter betrieben. Die verschiedenen Leitstationen bzw. Leitstellen, insbesondere bei unterschiedlichen Zugängen zum Bauwerk, können durch externe Leitungen, insbesondere Mietleitungen von einem Betreibers eines öffentlichen Netzes, verbunden werden. So wird eine Verbindung zwischen den Teilnetze vor dem Tunneldurchbruch erreicht. Nach dem Tunneldurchbruch und dem Zusammenschluss der Teilnetze kann durch die externen Leitungen die Zuverlässigkeit und Robustheit des Gesamtnetzes verbessert werden.

Wie bereits erwähnt basiert das System, insbesondere die Endgeräte 1 und die mit diesen kommunizierenden Komponenten der Basisstationen 2, bevorzugt auf dem GSM-Standard, insbesondere auf dem sogenannten D-Netz im 900 MHz Bereich, dem E-Netz im 1800 MHz Bereich oder dem z.B. in den USA gebräuchlichen Mobilnetz im 1900 MHz Bereich. An sich sind diese Frequenzen bestimmten Lizenznehmern zum Betrieb öffentlicher Mobiltelefonnetze vorbehalten. Es hat sich jedoch gezeigt, dass die nationalen Regulierungsbehörden in Anbetracht der klaren Trennung des Bereiches unter Tage von den Funkzonen allfälliger Lizenznehmer über Tage bereit sind Ausnahmebewilligungen zu erteilen. Dadurch ergeben sich für den Bau unter Tage Möglichkeiten der Netzgestaltung, die aus den oben genannten Gründen für den Bau über Tage nicht in Frage kommen. Insbesondere können für das erfindungsgemässe Verfahren Standardkomponenten aus dem Mobiltelefoniebereich eingesetzt werden, welche relativ kostengünstig sind und einen für Betriebs- oder Baustellenfunk aussergewöhnlich grossen Funktionsumfang bieten. Als Beispiel seien hier nur genannt SMS, Voicemail bzw. Sprachbox oder Umleiten von Anrufen aber auch die grundlegende Funktion einer Qualitativ hochwertigen Voll-Duplex Sprachverbindung, die jederzeit zu einem beliebigen Teilnehmer im Netz hergestellt werden kann. Gleichzeitig reduziert sich jedoch auch der Schulungsaufwand für die Benutzer, da viele der Bedienschnittstellen und -vorgänge den Benutzern bereits vom öffentlichen Mobilfunk her bekannt sind. Einen besonderen Vorteil bietet die GSM-Netztechnologie deshalb, weil die Grundlagen für die Standortbestimmung durch die Zellenstruktur des Netzes bereits im Standard vorgesehen sind. Die Ausführung des erfindungsgemässen Verfahrens bzw. der erfindungsgemässen Vorrichtung ist daher einfach und kostengünstig. Ausserdem hat sich die GSM-Technologie als sehr zuverlässig erwiesen, wobei der Nachweis insbesondere durch die hohen Benutzerzahlen erbracht wurde. GSM ist zudem ein offener Standard, so dass die Komponenten aufgrund des Wettbewerbes kostengünstig sind und auch in Zukunft mit Innovationen gerechnet werden kann.

Fig. 2 zeigt ein Schema eines Unter-Tage-Bauwerkes mit Darstellung der Funkzellen 23 einer bevorzugten Ausführung der erfindungsgemässen Überwachungsund Kommunikationsvorrichtung. Das Unter-Tage-Bauwerk besteht aus zwei parallelen Tunnelröhren 15 welche in regelmässigen Abständen mit Querschlägen 22 verbunden sind. Die Basisstationen 2 sind jeweils in den Querschlägen 22 angeordnet. Beim vorliegenden Beispiel sind an jede Basisstation 2 Antennen 24, 25 zum Ausleuchten von vier Funkzellen 23 angeschlossen. Die Anzahl Funkzellen 23 welche der selben Basisstation 2 zugeordnet sind kann jedoch auch anders gewählt werden, z.B. eins, zwei oder drei. Jede Funkzelle wird von mindestens einer Antenne ausgeleuchtet, kann jedoch auch, wie z.B. im Fall der schraffiert dargestellten, von mehreren Antennen 24, 25 ausgeleuchtet werden. Jede Funkzelle 23 bzw. C12, C13, C14, etc. und C22, C23, C24 etc. umfasst zumindest einen Abschnitt einer der Tunnelröhren 15. Ein solcher Abschnitt wird jeweils von einer Längsantenne 24 ausgeleuchtet und hat eine Länge von maximal 1 km und insbesondere maximal 500 m. Die Länge ist skalierbar. Um eine höhere Ortungsgenauigkeit zur Erreichen kann z.B. auch eine Länge von nur 100 m gewählt werden. Die Querschläge 22 werden von Querantennen 25 ausgeleuchtet und bilden eigene Funkzellen oder sind derselben Funkzelle zugeordnet, wie einer der Tunnelröhrenabschnitte, in die sie münden. Die Funkzelle C14, welche als Beispiel schraffiert dargestellt ist, umfasst einen Abschnitt einer Tunnelröhre 15 und zwei Querschläge 22. Die Position der mobilen Endgeräte wird im Location-Server gespeichert und kann mit dem graphischen Informationssystem dargestellt werden. Es ist jedoch auch vorgesehen die Position auf der Anzeige des mobilen Endgerätes anzuzeigen, und zwar bevorzugt nicht oder nicht nur als Identifikationszahl, sondern auch als Text, z.B. "Weströhre km 17". Ausgehend von der Information, wo sich gerade welches mobile Endgerät 1 befindet, werden verschiedene Funktionen gesteuert. So werden z.B. bestimmte Durchgänge nur geöffnet, wenn sich eine autorisierte Person in der Nähe befindet. Umgekehrt werden Durchgänge gesperrt und/oder es wird ein Alarm ausgelöst, wenn sich eine nicht autorisierte Person ihrer Nähe befindet. Zudem können Baumittel, z.B. Baumaschinen oder Sprengungen, in Abhängigkeit von den anwesenden Personen freigegeben oder gestoppt werden.

Insbesondere ist für die Baustelle ein Sicherheitsprozess definiert, der z.B. vorsieht, dass Personen und Fahrzeuge generell nur in das Bauwerk bzw. den Tunnel eingelassen werden, nachdem sie mit einem mobilen Endgerät ausgerüstet wurden. Die Endgeräte können den Benutzern temporär oder personifiziert und permanent zugeteilt werden.

Die allgemein gebräuchlichen Funksysteme von Notfalldiensten funktionieren unter Tage nur mit geringer Reichweite. Damit z.B. Rettungsfahrzeuge mit ihrer Zentrale in Verbindung treten können, sind die Basisstationen 2 und das Basisnetz 3 bevorzugt so gestaltet, dass allfällige Funksignale externer Funksysteme über die nächstliegende Basisstation 2 empfangen und über andere Basisstationen 2 wieder abgestrahlt werden. Die Reichweite von an sich nicht für den Betrieb unter Tage vorgesehenen Funksystemen wird dadurch verbessert und insbesondere wird eine bidirektionale Anbindung an eine entsprechende Funkzentrale des externen Funksystems ausserhalb des Unter-Tage-Bereiches erreicht. Der Empfang und das Abstrahlen der Funksignale des externen Funksystems erfolgt bevorzugt, indem die Frequenz oder der Frequenzbereich, bei der bzw. innerhalb dem ein Funksignal erwartet wird, mit einer ausreichend hohen Auflösung abgetastet und abgesehen von Quantisierungsfehlern und dergleichen identisch über andere Stationen wieder abgestrahlt wird. Es ist bevorzugt keine oder keine vollständige Demodulation bzw. Dekodierung des Signals des externen Funksystems vorgesehen. Dieses Verfahren hat den Vorteil, dass es für verschiedene externe Funksysteme unabhängig von den Detailspezifikationen ihrer Modulationsart und/oder ihres Übertragungsprotokolls funktioniert. Der Nachteil einer im Vergleich zu den Nutzdaten bzw. der Bandbreite des Nutzsignals grossen Datenmenge, welche bei der Weitergabe des Signals an andere Basisstationen übertragen werden muss, kommt bei einem breitbandig ausgelegten Basisnetz nicht zum Tragen.

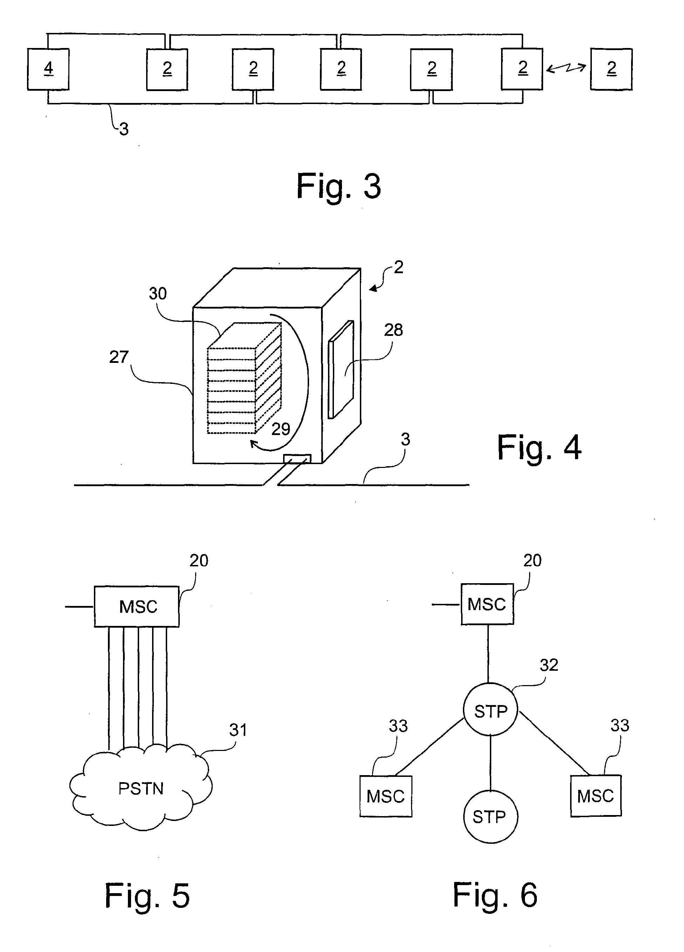

Fig. 3 zeigt ein Blockdiagramm einer bevorzugten Ausführung der erfindungsgemässen Überwachungsund Kommunikationsvorrichtung. Das Basisnetz 3 ist ringförmig. Es weist bevorzugt Glasfaserverbindungen auf. Die beiden von der Leitstation 4 abgehenden Leitungen sind vorzugsweise in unterschiedlichen Tunnelröhren angeordnet. So ist bei einer lokalen Leitungsunterbrechung, z.B. durch einen Brand die Versorgung aller Basisstationen 2 weiterhin gewährleistet. Bevorzugt werden die Leitungen zudem im Bereich des Tunnelbodens angeordnet, wo sie bei einem Brand weniger schnell zerstört werden. In der Bauphase, d.h. z.B. bei einem Tunnelvortrieb, wird zum Anschluss einer zusätzlichen Basisstation der Ring kurz unterbrochen und dann unter Einbezug der neuen Station wieder geschlossen. Basisstationen 2 im Vortriebsbereich, d.h. im Bereich, in welchem die Tunnelbohrmaschine angeordnet und/oder Sprengungen durchgeführt werden, sind bevorzugt über eine Funkverbindung an das Basisnetz 3 angeschlossen.

Fig. 4 zeigt eine Basisstation 2 einer bevorzugten Ausführung der erfindungsgemässen Überwachungsund Kommunikationsvorrichtung. Die Basisstation 2 besteht aus einem gegen Umgebungseinflüsse, insbesondere Wasser und Staub, geschützten Schrank 27. Es ist kein Luftaustausch mit der Umgebung vorgesehen. Statt dessen ist ein interner Luftkreislauf 29 vorgesehen. Dieser führt an einem Peltierelement 28 in der Wand des Schrankes 27 vorbei, welches das Innere des Schrankes 27 kühlt und die dabei anfallende Wärme an der Aussenseite des Schrankes 27 abgibt. Es sind jedoch auch andere Klimaanlagen möglich, z.B. mit Kompressor, wobei diese bis auf einen Wärmetauscher im Schrank angeordnet werden können. Die verschiedenen Schaltungseinheiten der Basisstation 2 sind in einem Steckgehäuse 30 angeordnet. Die Basisstationen 2 und das Basisnetz 3 sind bevorzugt so ausgestaltet, dass beim Anschluss von Basisstationen 2 ans Basisnetz 3 keine Konfiguration von Netz oder Station erforderlich ist. Neue Stationen werden automatisch erkannt und als Netzknoten registriert. Die Basisstationen 2 zeigen insbesondere vor Ort an, ob sie ans Netz angeschlossen sind und als Netzknoten erkannt wurden. Auch falls eine Basisstation 2 ausfällt, kann dies vor Ort erkannt werden. Eine ausgefallene Basisstation 2 kann jederzeit, ohne Betriebsunterbrechung des Netzes, mit geringem Aufwand und ohne spezielle Kenntnisse durch eine andere ersetzt werden.

Fig. 5 zeigt die Anbindung der erfindungsgemässen Überwachungs- und Kommunikationsvorrichtung an ein öffentliches Telefonnetz, insbesondere Festnetz, mittels Interkonnektion. Das MSC, d.h. das Mobile Switching Center bzw. die Vermittlungszentrale für Mobiltelefonverbindungen, ist über eine Anzahl Telefonleitungen mit dem öffentlichen Telefonnetz 31 verbunden. Als Ergänzung zum MSC kann auch eine konventionelle, d.h. z.B. analoge oder ISDN-Telefonzentrale vorgesehen sein. Stationäre analogoder ISDN-Telefone können zusätzlich zu den Mobiltelefonen vorgesehen sein, insbesondere in der Leitstelle 16 und an den Basisstationen 2.

Fig. 6 zeigt die Anbindung der erfindungsgemässen Überwachungs- und Kommunikationsvorrichtung an ein öffentliches Telefonnetz mittels Roaming. Das technische Prinzip dieser Anbindung ist identisch mit der Verbindung zwischen den Mobilnetzen von Mobilnetzbetreibern verschiedener Länder. Im Gegensatz zur anhand von Figur 5 beschriebenen Interkonnektion ist es bei dieser Art der Anbindung möglich mit den Endgeräten 1 der Baustelle ohne Auswechseln der SIM-Karte oder dergleichen ausserhalb der Baustelle in einem externen Mobilnetzes Anrufe zu tätigen und entgegenzunehmen. Umgekehrt ist es auch möglich mit einem Mobiltelefon ausgerüstet mit einer SIM-Karte eines Betreibers eines externen Mobilnetzes innerhalb der Baustelle über die Kommunikationsvorrichtungen der Baustelle zu telefonieren. Es sind Anrufe vom internen Netz ins externe und umgekehrt möglich. Das MSC, d.h. Mobile Switching Center 20, der Baustelle ist über einen STP, d.h. Signal Transfer Point 32 bzw. Signalübertragungsort, mit den MSC, d.h. Mobile Switching Center 33, anderer Netzbetreiber verbunden.

Neben der Anbindung an das öffentliche Telefonnetz ist insbesondere auch die Anbindung ans Internet vorgesehen, wobei das interne Netz durch dem Fachmann bekannte Sicherheitsmittel vom Internet getrennt ist.

Das erfindungsgemässe Verfahren bzw. die erfindungsgemässe Vorrichtung bildet eine integrierte, offene und zentralisierte Plattform für den Betrieb verschiedener Anwendungen, insbesondere im Bereich Ortung und Kommunikation im Tunnelbau. Die Personenüberwachung und Ortung erfolgt in Echtzeit. Es ist Standort- und Präsenzkontrolle möglich. Verfügbarkeit und Sicherheit sind aufgrund der redundanten Kommunikation und Übertragung sehr hoch. Es ist eine Skalierung und insbesondere Erweiterung während des Betriebs möglich. Die Schnittstellen sind international normiert. Die einzelnen Komponenten sind kostengünstig, vielseitig einsetzbar und zuverlässig, da sie auf Standardtechnologie von Telefonie und EDV basieren. Wartung und Betrieb der Anlage ist einfach und kann durch das bestehende Personal erfolgen. Die Anlage kann nach Beendigung der Bauphase entweder auf einer anderen Baustelle wieder verwendet werden, oder sie kann für die Ausrüstung des Tunnels bzw. Bauwerks weiter verwendet werden und insbesondere später in eine Anlage für den Betrieb des Tunnels bzw. Bauwerks überführt werden.

Die vorliegende Beschreibung bezieht sich auf bestimmte Beispiele von Bauwerken bzw. Baustellen unter Tage. Das erfindungsgemässe Verfahren und die erfindungsgemässe Vorrichtung sind jedoch auch für andere Bauwerke bzw. Baustellen unter Tage geeignet. Insbesondere ist der Begriff "Tunnel" im vorliegenden Dokument so auszulegen, dass er sich auf alle Arten von Tunneln beziehen kann, also z.B. Einröhrentunnel, Zweiröhrentunnel, Servicestollen, Zugangsröhren, Querstollen, Lüftungsschächte und Kombinationen davon.

## Patentansprüche

1. Verfahren zur Sicherung von und Kommunikation auf Baustellen unter Tage, **dadurch gekennzeichnet, dass**
- die Baustelle in Funkzellen (23) aufgeteilt ist,
- jede Funkzelle (23) einer Basisstation (2) zugeteilt ist,
- die Basisstationen (2) über ein Basisnetz (3) miteinander verbunden sind,
- jede zu überwachende Person und/oder jedes zu überwachende Objekt ein mobiles Endgerät (1) hat, welches jeweils mit einer Basisstation (2) in Funkkontakt steht und
- eine Leitstelle (16) vorgesehen ist, von welcher aus eine Position von Personen und/oder Objekten aufgrund der Funkzelle (23), in der sich ihr mobiles Endgerät (1) gerade befindet, ermittelt und dargestellt wird.

2. Verfahren gemäss Anspruch 1, **dadurch gekennzeichnet, dass** die mobilen Endgeräte (1) auf dem GSM-Standard und/oder dem UMTS-Standard und/oder dem DECT-Standard und/oder dem WLAN Standard und/oder dem EDGE-Standard basieren und insbesondere mindestens ein Teil der mobilen Endgeräte (1) Mobiltelefone sind.

3. Verfahren gemäss einem der vorhergehenden Ansprüche, **dadurch gekennzeichnet, dass** die mobilen Endgeräte (1) mindestens alle 30 min, bevorzugt mindestens alle 5 min, zu einer Antwort aufgefordert werden, um festzustellen, ob sich bezüglich der Funkzelle (23) in der sie sich befinden eine Änderung ergeben hat.

4. Verfahren gemäss einem der vorhergehenden Ansprüche, **dadurch gekennzeichnet, dass** die Funkzellen (23) eine Länge von maximal 1 km und insbesondere maximal 500 m haben.

5. Verfahren gemäss einem der vorhergehenden Ansprüche, **dadurch gekennzeichnet, dass** auf den mobilen Endgeräten (1) deren aktuelle Position als Identifikationszahl und/oder als Text angezeigt wird.

6. Verfahren gemäss einem der vorhergehenden Ansprüche, **dadurch gekennzeichnet, dass** insbesondere in der Leitstelle (16) ein graphisches Informationssystem (21) vorgesehen ist, mittels dem eine Position von mobilen Endgeräten (1) graphisch als Symbol in einem Schema oder Plan dargestellt wird, und insbesondere eine Sprechverbindung mit einem mobilen Endgerät (1) durch Auswahl oder Anklicken des jeweiligen Symbols hergestellt wird.

7. Verfahren gemäss einem der vorhergehenden Ansprüche, **dadurch gekennzeichnet, dass** das Basisnetz (3) Kabelverbindungen, insbesondere Glasfaserverbindungen, und/oder Funkstrecken aufweist.

8. Verfahren gemäss Anspruch 7, **dadurch gekennzeichnet, dass** die Kabelverbindungen gegebenenfalls im Bereich eines Tunnelbodens angeordnet sind und/oder die Funkstrecken gegebenenfalls insbesondere in einem Vortriebs- oder Erweiterungsbereich der Baustelle vorgesehen sind.

9. Verfahren gemäss einem der vorhergehenden Ansprüche, **dadurch gekennzeichnet, dass** das Basisnetz (3) im Wesentlichen ringförmig ist, so dass jede Basisstation (2) über zwei Pfade mit der Leitstation (4) verbunden ist, wobei die zwei Pfade insbesondere in zwei verschiedenen Bauwerksbereichen oder Tunnelröhren angeordnet sind.

10. Verfahren gemäss Anspruch 9, **dadurch gekennzeichnet, dass** bei einer Erweiterung der Baustelle, insbesondere bei einem Tunnelvortrieb, eine Verbindung zwischen den zwei vordersten Basisstationen (2) temporär unterbrochen wird und anschliessend unter Einbezug einer neu installierten zusätzlichen Basisstation (2) wieder hergestellt wird.

11. Verfahren gemäss einem der vorhergehenden Ansprüche, **dadurch gekennzeichnet, dass** die Basisstationen (2) in Querschlägen (22) angeordnet sind und/oder die Funkzellen (23) jeweils aus einem Abschnitt eines Tunnels (15) und einer Anzahl mit diesem in Verbindung stehenden Querschlägen (22) bestehen.

12. Verfahren gemäss einem der vorhergehenden Ansprüche, **dadurch gekennzeichnet, dass** die Basisstationen (2) Schnittstellen zum Anschluss lokaler Geräte und/oder weiterer Stationen aufweisen, insbesondere nach einem oder mehreren der folgenden Standards:
- Ethernet/IP, insbesondere Ethernet 10/100 Base-T oder 10/100 Base-FX oder 1000 Base-T oder 1000 Base-SX oder 1000 Base-LX gemäss IEEE 802.x LAN Standards, insbesondere gemäss IEEE 802.3 Standards
- SDH, insbesondere STM-1 electrical, d.h. elektrisch, ETSI G.703 oder STM-N optical, d.h. optisch, ETSI G.957, G.958, wobei N, die Hierarchiestufe, gleich 1, 4, 16 oder 64 ist
- PDH, insbesondere E1, E2, E3 oder E4 gemäss ETSI G.703 und/oder ETSI G.704
- RS-485, d.h. US-Norm EIA RS485
- RS-232, d.h. US-Norm EIA RS232C, DIN 66020 oder CCITT V.24
- ISDN- oder Analogtelefon

13. Verfahren gemäss einem der vorhergehenden Ansprüche, **dadurch gekennzeichnet, dass** Überwachungselemente, insbesondere Kameras (10) und/oder Messfühler oder - geräte für Brand, Gas, Wasser, Felsbewegung, Temperatur, Luftfeuchtigkeit, Luftgeschwindigkeit, Luftdruck, Baustrom, Zugstrom und/oder Verkehr vorgesehen sind, wobei diese über Kabel oder Funk mit einer der Basisstationen (2) kommunizieren.

14. Verfahren gemäss einem der vorhergehenden Ansprüche, **dadurch gekennzeichnet, dass** Kontrollelemente, insbesondere für Lüftung, Türen, Baustrom, Baumittel, Signale, Ampeln und/oder Durchfahrtsbarrieren vorgesehen sind, wobei diese über Kabel oder Funk mit einer der Basisstationen (2) kommunizieren.

15. Verfahren gemäss einem der vorhergehenden Ansprüche, **dadurch gekennzeichnet, dass** insbesondere bei Gefahren, besonderen Ereignissen oder zu Testzwecken ein Alarm und/oder Notruf ausgelöst wird, insbesondere über Alarm- bzw. Notrufmelder, welche über Kabel oder Funk mit einer der Basisstationen (2) kommunizieren oder über die mobilen Endgeräte (1), insbesondere über eine Totmannfunktion.

16. Verfahren gemäss einem der vorhergehenden Ansprüche, **dadurch gekennzeichnet, dass** geprüft wird, ob ein mobiles Endgerät (1) für den Aufenthalt in einer Funkzelle in der es sich befindet autorisiert ist und insbesondere bei fehlender Autorisierung ein Alarm ausgelöst, Baumittel gestoppt und/oder Durchgänge gesperrt werden.

17. Verfahren gemäss einem der vorhergehenden Ansprüche, **dadurch gekennzeichnet, dass** mindestens ein Teil der Basisstationen (2) jeweils als Schrank (27) ausgestaltet sind, welcher im Wesentlichen Staub- und Wasserdicht ist, und/oder im Inneren ein Kühlluftstrom einen geschlossenen Kreislauf (29) bildet, wobei insbesondere eine aktive Kühlung mit einer Klimaanlage im Schrank oder einem in der Wand des Schrankes (27) angeordneten Peltierelement (28) vorgesehen ist.

18. Verfahren gemäss einem der vorhergehenden Ansprüche, **dadurch gekennzeichnet, dass** sich die Basisstationen (2) bei einem Anschluss ans Basisnetz (3) selbst konfigurieren und anmelden, wobei die Basisstation (2) insbesondere vor Ort anzeigt, ob sie korrekt konfiguriert und angemeldet ist.

19. Verfahren gemäss einem der vorhergehenden Ansprüche, **dadurch gekennzeichnet, dass** zwischen den mobilen Endgeräten (1) und/oder stationären Telefonen bei Bedarf Sprech- und/oder Datenverbindungen hergestellt werden, und insbesondere auch Verbindungen zum öffentlichen Telefonnetz möglich sind, wobei diese über Roaming und/oder Interkonnektion realisiert werden.

20. Verfahren gemäss einem der vorhergehenden Ansprüche, **dadurch gekennzeichnet, dass** die Basisstationen (2) Funksignale externer Funksysteme, insbesondere von Notfalldiensten, empfangen und die Funksignale auf anderen Basisstationen (2) wieder abgestrahlt werden, derart, dass die Reichweite von an sich nicht für einen Betrieb unter Tage vorgesehenen Funksystemen verbessert und insbesondere eine Anbindung an eine Funkstation des externen Funksystems ausserhalb der Baustelle erreicht wird.

21. Vorrichtung zur Durchführung des Verfahrens von einem der vorhergehenden Ansprüche, **dadurch gekennzeichnet, dass** eine Vielzahl von mobilen Endgeräten (1), eine Vielzahl von Basisstationen (2) und mindestens eine Leitstation (4) vorgesehen sind, wobei die Basisstationen (2) und die mindestens eine Leitstation (4) über ein Basisnetz (3) miteinander verbunden sind und ein eigenständiges Mobilfunknetz mit einer Vielzahl von Funkzellen (23) bilden und dass Mittel zur Bestimmung und Darstellung einer Position der mobilen Endgeräte (1) aufgrund der Funkzelle (23) in der sie sich jeweils befinden vorgesehen sind, wobei die mobilen Endgeräte (1) Personen und/oder Objekten zuordbar sind.
